(19) **Europäisches Patentamt European Patent Office Office européen des brevets**

(11) **EP 1 355 089 B1**

(12) **EUROPEAN PATENT SPECIFICATION**

(45) Date of publication and mention
of the grant of the patent:
**24.03.2010 Bulletin 2010/12**

(51) Int Cl.:
***F16H 61/00*** (2006.01)

(21) Application number: **03008943.7**

(22) Date of filing: **16.04.2003**

(54) **Hydraulic control system for automatic transmission**

Hydraulische Steuerung für ein automatisches Getriebe

Système de commande hydraulique pour une transmission automatique

(84) Designated Contracting States:
**DE FR GB**

(30) Priority: **17.04.2002 JP 2002114079**

(43) Date of publication of application:
**22.10.2003 Bulletin 2003/43**

(73) Proprietor: **JATCO Ltd**
**Fuji-shi,**
**Shizuoka 417-8585 (JP)**

(72) Inventor: **Katou, Yoshiaki**
**Fuji-shi,**
**Shizuoka 417-8585 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 487 129       EP-A- 0 881 415**
**EP-A- 1 126 197       DE-A1- 19 519 461**
**US-A- 5 782 718**

## Description

## BACKGROUND OF THE INVENTION

The present invention relates to a hydraulic control system for an automatic transmission with an idling stop control, and specifically, to a hydraulic control system for the automatic transmission including a belt-drive continuously variable transmission (CVT).

A preliminary text of an academic lecture under the title of "No. 67-00, 20005220 Hydraulic and Electronic Control Systems for CVT of Hybrid Automobiles, published by Society of Automotive Engineers of Japan (JSAE), discloses an idling stop motor vehicle having an engine-drive pump and a belt-drive CVT. In the system of the motor vehicle, a wet clutch is used as a starter clutch. When the engine restarts after idling stop, an application torque of the starter clutch is adjusted by an electronically-operated hydraulic actuator. Also, upon the engine restarting operation after idling stop, a rise in transmission torque of a forward clutch is retarded relative to a rise in transmission torque of the starter clutch by adjusting oil pressures applied thereto, e.g., through orifices within a hydraulic circuit. This prevents a belt of the CVT from being slipped due to decrease in discharge oil pressure which is caused immediately after the engine restarting operation.

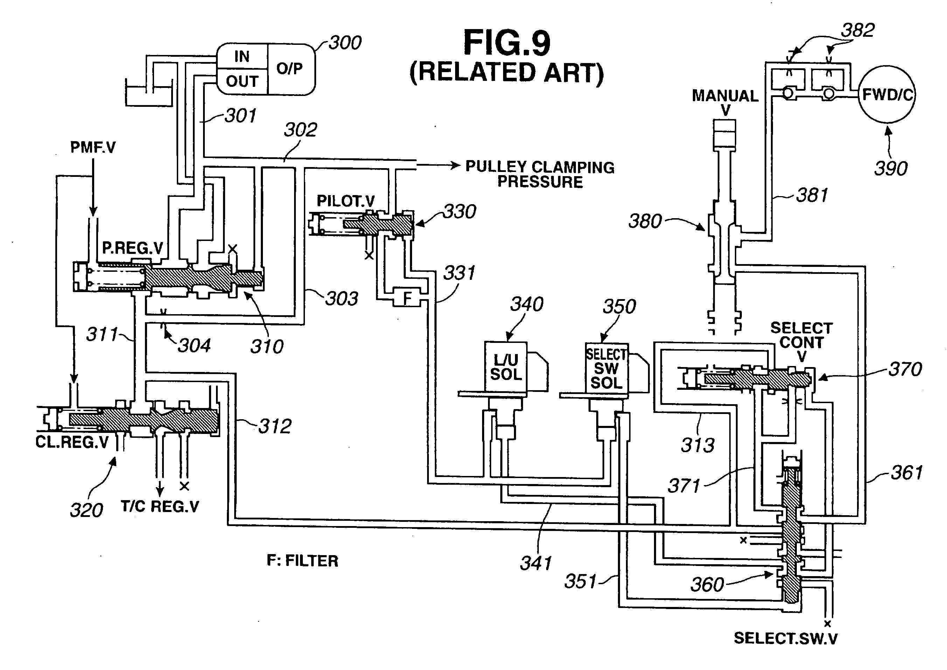

In addition, a hydraulic circuit of a belt-drive CVT having a torque converter as a starter clutch, is known. Fig. 9 illustrates the hydraulic circuit. As shown in Fig. 9, a discharge port of oil pump 300 is communicated with pressure regulator valve 310 via oil passage 301. Pressure regulator valve 310 is communicated with clutch regulator valve 320 via oil passage 311. The discharge pressure of oil pump 300 is regulated by pressure regulator valve 310. The regulated discharge pressure is supplied to the CVT via oil passage 302 and acts as a pulley clamping pressure. Oil passage 303 having orifice 304 is connected with oil passage 302. Clutch regulator valve 320 regulates a relief pressure supplied from pressure regulator valve 310 via oil passage 311 and a line pressure supplied via orifice 304 in oil passage 303, to thereby create a forward clutch pressure. A pilot pressure regulated by pilot valve 330 is supplied to lockup solenoid valve 340 and select switching solenoid valve 350 and creates initial pressures thereof. Each of solenoid valves 340 and 350 controls operations of select switching valve 360 and select control valve 370. Upon restarting of the engine, the oil pressure produced by oil pump 300 is supplied to the CVT via oil passage 302 and acts as the pulley clamping pressure. Also, the oil pressure from oil pump 300 is supplied to forward clutch 390, oil passages 312 and 313, select control valve 370, oil passage 371, select switching valve 360, oil passage 361, manual valve 380 and oil passage 381.

In the case of the hydraulic circuit shown in Fig. 9, an input torque immediately after the starting operation is univocally determined based on engine speed and intrinsic properties, namely, coefficient of torque capacity and stall torque ratio, of the torque converter. The discharge pressure from oil pump 300 is fed to the hydraulic circuit of forward clutch 390 via orifices 304 and 382, so that a rise of the forward clutch applying pressure is retarded relative to a rise of the pulley clamping pressure. This will prevent slippage of the belt of the CVT and shock due to the surge pressure occurring upon application of forward clutch 390.

The document EP0487129, which constitutes the closest prior art, discloses:

A hydraulic control system for an automatic transmission including a belt-drive continuously variable transmission, a forward clutch and a torque converter connected to an engine, the system comprising:

> an oil pump drivingly connected to the engine;
> forward clutch applying-pressure regulator means for regulating an applying-pressure to the forward clutch;
> an electronically-operated hydraulic control valve outputting a first signal pressure indicative of an optionally settable oil pressure to the forward clutch applying-pressure regulator means;
> a control unit controlling the hydraulic control valve;
> a first oil passage communicating the oil pump and the forward clutch applying-pressure regulator means, the first oil passage having a reduced flow resistance;
> a second oil passage communicating the clutch applying-pressure regulator means and the forward clutch, the second oil passage having a reduced flow resistance;
> a third oil passage feeding a clamping pressure applied to the belt of the continuously variable transmission; and
> the forward clutch applying-pressure regulator means, in response to the signal pressure from the hydraulic control valve, controlling the communication between the first and second oil passages.

## SUMMARY OF THE INVENTION

In the related art of Fig. 9, the following inconvenience or problems will occur upon the engine restarting operation after idling stop. The input torque is univocally determined based on a state of the rise of engine speed. Further, forward clutch 390 is supplied with the line pressure via orifices 304 and 382, whereby the rise of the forward clutch applying pressure is extremely retarded, resulting in occurrence of large shock.

An object of the present invention is to eliminate the above-described problems, and to provide a hydraulic control system for an automatic transmission in which the hydraulic flow discharged from an oil pump can be supplied to a forward clutch without delay in response.

In one aspect of the present invention, there is provided a hydraulic control system for au automatic transmission including a belt-drive continuously variable transmission, a forward clutch and a torque converter connected to an engine, the system comprising:

an oil pump drivingly connected to the engine;
forward clutch applying-pressure regulator means for regulating an applying-pressure to the forward clutch;
an electronically-operated hydraulic control valve outputting a first signal pressure indicative of an optionally settable oil pressure to the forward clutch applying-pressure regulator means;
a control unit controlling the hydraulic control valve;
a first oil passage communicating the oil pump and the forward clutch applying-pressure regulator means, the first oil passage having a reduced flow resistance;
a second oil passage communicating the clutch applying-pressure regulator means and the forward clutch, the second oil passage having a reduced flow resistance;
a third oil passage feeding a clamping pressure applied to the belt of the continuously variable transmission; and
hydraulic pressure detector means for detecting an oil pressure in the third oil passage;
the forward clutch applying-pressure regulator means, in response to the signal pressure from the hydraulic control valve, controlling the communication between the first and second oil passages;
the control unit being programmed to determine an oil pressure value at which a forward clutch transmittable torque capacity and a belt transmittable torque capacity are equal to each other, the forward clutch transmittable torque capacity and the belt transmittable torque capacity being determined based on oil pressure, and programmed to output a first command to the hydraulic control valve such that the hydraulic control valve produces a second signal pressure for communicating the first and second oil passages at a full-open state when the oil pressure in the third oil passage detected by the hydraulic pressure detector means is not more than the determined oil pressure value upon a restart operation of the engine after idling stop.

**BRIEF DESCRIPTION OF THE DRAWINGS**

Fig. 1 is a schematic diagram illustrating a hydraulic control system of an automatic transmission equipped with a belt-drive continuously variable transmission (CVT), according to an embodiment of the present invention;
Fig. 2 is a circuit diagram illustrating a hydraulic circuit of the hydraulic control system of Fig. 1;
Fig. 3 is a flowchart illustrating control logic of idling stop control used in the embodiment;
Fig. 4 is a flowchart illustrating control logic of forward clutch pressure control upon an engine restart operation used in the embodiment;
Fig. 5 is a timing chart illustrating the engine restart control used in the embodiment;
Fig. 6 is a graph illustrating a relationship between oil pressure and transmission torque capacity of each of a forward clutch and a belt of the CVT in the embodiment;
Fig. 7 is a map illustrating a relationship between throttle opening degree and set value of engine speed in the embodiment;
Figs. 8A and 8B are diagrams illustrating a relationship between transmission torque capacity and oil pressure, and a relationship between engine speed and oil pressure, respectively; and
Fig. 9 is a circuit diagram illustrating a hydraulic circuit of a belt-drive CVT of a related art.

**BEST MODE FOR CARRYING OUT THE INVENTION**

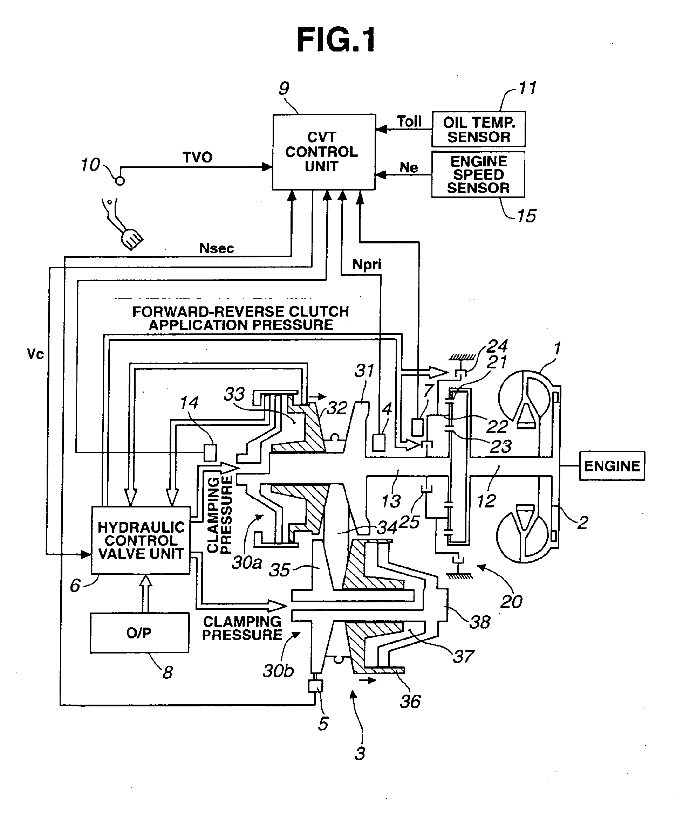

Referring now to Fig. 1, there is shown a hydraulic control system of an automatic transmission with belt-drive continuously variable transmission (CVT) 3, according to an embodiment of the present invention. As illustrated in Fig. 1, torque converter 1 is connected to an output shaft of an engine. Lockup clutch 2 is disposed between the engine and CVT 3 so as to allow direct connection therebetween. An output side of torque converter 1 is drivingly coupled with ring gear 21 of forward-reverse switching mechanism 20. Forward-reverse switching mechanism 20 includes a planetary gear train, forward clutch 25 and reverse brake 24. The planetary gear train includes ring gear 21, pinion carrier 22, and sun gear 23 drivingly coupled with input shaft 13 of CVT 3. Reverse brake 24 is operative to fix pinion carrier 22 to a transmission case. Forward clutch 25 is operative to couple input shaft 13 and pinion carrier 22 with each other. Reference numeral 8 denotes an oil pump drivingly connected to the engine.

CVT 3 includes primary pulley 30a, secondary pulley 30b and belt 34 connecting primary and secondary pulleys 30a and 30b to thereby transmit the rotation force of primary pulley 30a to secondary pulley 30b. Primary pulley 30a is connected to a rear end portion of input shaft 13. Primary pulley 30a includes fixed disk 31 rotatable together with input shaft 13, and moveable disk 32 opposed to fixed disk 31 in an axial direction of input shaft 13. Fixed and moveable disks 31 and 32 have generally conical shapes and cooperate with each other to form a V-groove in which belt 34 is engaged. Moveable disk 32 is axially moved on input shaft 13 by an oil pressure supplied to primary pulley cylinder chamber 33. Secondary pulley 30b is disposed on driven shaft 38. Secondary pulley 30b includes fixed conical disk 35 rotatable together with driven shaft 38, and moveable disk 36 opposed to fixed disk 35 in an axial direction of driven shaft 38.

Fixed and moveable disks 35 and 36 have generally conical shapes and cooperate with each other to form a V-groove in which belt 34 is engaged. Moveable disk 36 is axially moved on driven shaft 38 by an oil pressure supplied to secondary pulley cylinder chamber 37. A driving gear, not shown, is fixed onto driven shaft 38. The driving gear is operative to drive a driving shaft connected to a wheel, via a pinion on an idling shaft, a final gear and a differential.

The rotation force inputted from output shaft 12 of the engine is transmitted to input shaft 13 of CVT 3 via torque converter 1 and forward-reverse switching mechanism 20. The rotation force of input shaft 13 is successively transmitted to primary pulley 30a, belt 34, secondary pulley 30b, driven shaft 38, the driving gear, an idler gear, the idling shaft, the pinion, the final gear and the differential. Upon thus transmitting the rotation force, moveable disk 32 of primary pulley 30a and moveable disk 36 of secondary pulley 30b are axially moved on input and driven shafts 13 and 38, respectively, to change a width of the V-groove which extends in the axial direction of input and driven shafts 13 and 38. A radius of curvature of a circular arc formed by V-belt 34 contacted with pulleys 30a and 30b is continuously changed by the change in the V-groove width. Rotation ratio, namely, speed change ratio, between primary pulley 30a and secondary pulley 30b can be thus performed. This control of the V-groove width is conducted by controlling the oil pressure supplied to primary pulley cylinder chamber 33 and secondary pulley cylinder chamber 37. The hydraulic control is performed by CVT control unit 9.

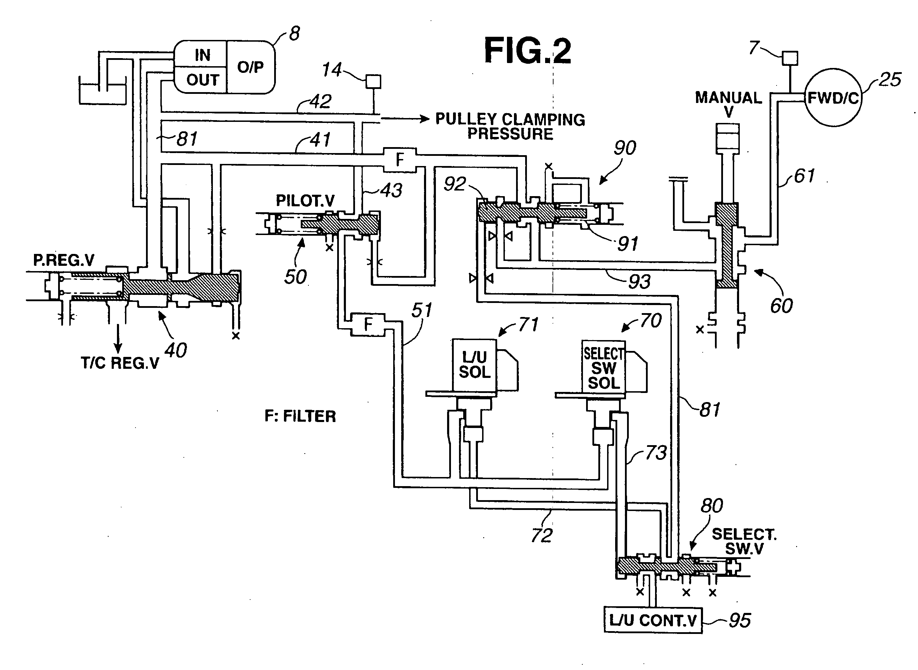

A plurality of sensors are connected to CVT control unit 9. The sensors includes engine speed sensor 15, throttle opening degree sensor 10, oil temperature sensor 11, primary pulley speed sensor 4, secondary pulley speed sensor 5, pulley clamping pressure sensor 14 and forward clutch pressure sensor 7. Engine speed sensor 15 detects engine speed, i.e., the number of engine revolution, and generates signal Ne indicative of the detected engine speed. Throttle opening degree sensor 10 detects an opening degree of a throttle valve and generates signal TVO indicative of the detected opening degree. Oil temperature sensor 11 detects an oil temperature in the transmission case and generates signal Toil indicative of the detected oil temperature. Primary pulley speed sensor 4 detects the number of rotation of primary pulley 30a and generates signal Npri indicative of the detected rotation number. Secondary pulley speed sensor 5 detects the number of rotation of secondary pulley 30b and generates signal Nsec indicative of the detected rotation number. Pulley clamping pressure sensor 14 detects a pulley clamping pressure supplied to each of primary and secondary pulley cylinder chambers 33 and 37 so as to clamp belt 34, and generates a signal indicative of the detected clamping pressure. Forward clutch pressure sensor 7 detects a forward clutch applying pressure supplied to forward clutch 25 and generates a signal indicative of the detected applying pressure. CVT control unit 9 receives the signals generated from these sensors and processes the signals to develop and transmit command signal Vc to hydraulic control valve unit 6 for controlling oil pressure in a hydraulic circuit shown in Fig. 2, of the hydraulic control system. The hydraulic control conducted by CVT control unit 9 via hydraulic control valve unit 6 is explained later.

Hydraulic control valve unit 6 receives a plurality of signals indicative of an accelerator opening degree, a speed change ratio of CVT 3, the rotation number of input shaft 13, a primary pulley pressure, and the like. Hydraulic control valve unit 6 supplies the pulley clamping pressure controlled depending on the signals, to primary and secondary pulley cylinder chambers 33 and 37.

Referring to Fig. 2, hydraulic control valve unit 6 and the hydraulic circuit of the hydraulic control system are explained. As illustrated in Fig. 2, hydraulic control valve unit 6 includes pressure regulator valve 40 connected with oil pump 8 via oil passage 81. Pressure regulator valve 40 regulates a discharge pressure from oil pump 8 and produces a line pressure as the pulley clamping pressure. Oil passages 41 and 42 are communicated with oil passage 81. Oil passage 41 supplies the line pressure to select control valve 90. Oil passage 42 supplies the pulley clamping pressure to primary pulley cylinder chamber 33 and secondary pulley cylinder chamber 37. Pulley clamping pressure sensor 14 is disposed in oil passage 42. Oil passage 43 is communicated with oil passage 42 and supplies an initial pressure to pilot valve 50. Pilot valve 50 produces a constant pressure supplied to select switching solenoid valve 70 and lockup solenoid valve 71 via oil passage 51 through filter F. In response to the command signal from control unit 9, select switching solenoid valve 70 generates and transmits a signal pressure to select switching valve 80 via oil passage 73 and controls the operation of select switching valve 80. In response to the command signal from control unit 9, lockup solenoid valve 71 generates and transmits a signal pressure to select switching valve 80 via oil passage 72.

When the signal pressure of select switching solenoid valve 70 is zero, the signal pressure of lockup solenoid valve 71 is transmitted to select control valve 90 via select switching valve 80. When the signal pressure of select switching solenoid valve 70 is not zero, namely, if the signal pressure of select switching solenoid valve 70 is transmitted to select switching valve 80, the signal pressure of lockup solenoid valve 71 is introduced to lockup control valve 95.

When the signal pressure of select switching solenoid valve 70 and the signal pressure of lockup solenoid valve 71 are zero, the signal pressure transmitted to select control valve 90 is zero. At this time, spool valve 92 of select control valve 90 is moved to the left most end and placed in the full-open position shown in Fig. 2 by the force of return spring 91. In this position, the discharge pressure of oil pump 8, namely, the line pressure, is introduced from oil passage 41 to output oil passage 93, with extremely small flow resistance. Output oil passage 93 is connected to forward clutch 25 via manual valve 60 and oil passage 61 when a driving (D) range is selected. Oil passage 61 connects manual valve 60 and forward clutch 25 with each other, in which forward clutch pressure sensor 7 is disposed.

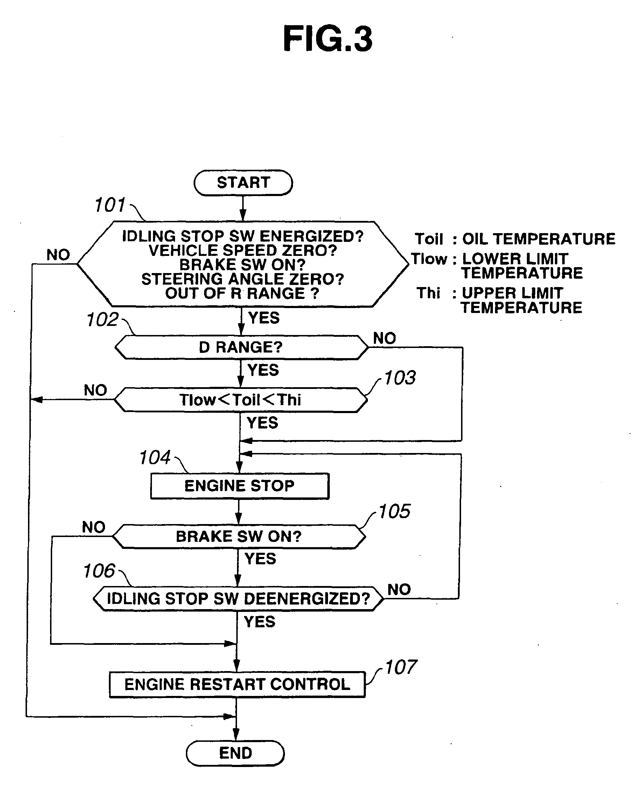

Referring to Fig. 3, a flow of idling stop control is explained. Logic flow starts and goes to block S101 where an interrogation is made whether or not all of the following conditions a)-e) are satisfied. The conditions are: a) an idling stop switch is energized, b) the vehicle speed is zero, c) a brake switch is ON, d) steering angle (rudder angle) of a steering wheel or drive wheels is zero, and e) a reverse (R) range is not selected. If, at block S101, the interrogation is in affirmative, the logic flow goes to block S2. Namely, the affirmative indicates that the vehicle operator intends to conduct idling stop control, the vehicle is in the stopped state, the brake pedal is depressed, the steering angle is zero, and the engine is out of the R range. The idling stop switch is operated by the vehicle operator to conduct or release the idling stop control according to the operator's intention. The idling stop switch is energized when an ignition key is turned to the ON position. When the vehicle is temporarily stopped during running, for instance, to make a turn, the steering angle is not zero. In such a case, the idling stop must be prohibited.

At block S102, an interrogation is made whether or not the D range is selected. If, at block S102, the interrogation is in affirmative, the logic flow goes to block S103 where an interrogation is made whether or not oil temperature Toil is higher than lower limit Tlow and lower than upper limit Thi. If, at block S103, the interrogation is in affirmative, the logic flow goes to block S104 where the engine is stopped. In a case where oil temperature Toil is less than lower limit Tlow, a predetermined amount of oil will fail to be charged due to high viscosity resistance thereof before the engine operation completely starts, specifically, before completion of cranking of the engine. On the other hand, if oil temperature Toil is more than upper limit Thi, a volumetric efficiency of oil pump 8 will be reduced and an amount of oil leaking from the valves will be increased due to decrease in viscosity resistance of oil. This leads to the failure to charge the predetermined amount of oil into engaging elements before the engine operation completely starts. The logic flow then goes to block S105.

At block S105, an interrogation is made whether or not the brake switch is in the ON state. If, at block S105, the interrogation is in affirmative, the logic flow goes to block S106 where an interrogation is made whether or not the idling stop switch is deenergized. If, at block S106, the interrogation is in affirmative, indicating that the idling stop switch is deenergized, the logic flow goes to block S107. Namely, if the idling stop switch is deenergized even when the brake switch is ON, the vehicle operator intends to start the engine. If the engine is stopped by the idling stop control, a battery will be overloaded. In this state, when the vehicle operator feels the temperature of a compartment hot, an air conditioner cannot be operated. In order to avoid such an inconvenience, the idling stop switch can be deenergized according to the vehicle operator's intention. At block S107, engine restart control is implemented by operating a starter.

If, at block S101, the interrogation is in negative, the routine is terminated. If, at block S102, the interrogation is in negative, the logic flow jumps to block S104. If, at block S103, the interrogation is in negative, the logic flow jumps to END and goes back to block S101. If, at block S105, the interrogation is in negative, indicating that the vehicle operator intends to start the engine, the logic flow goes to block S107 where the engine is restarted by operating the starter.

When the engine is stopped, oil pump 8 is also stopped. The oil in each of forward clutch 25 and pulley cylinder chambers 33 and 37 of CVT 3 flows out via the oil passages, so that the oil pressure in forward clutch 25 and pulley cylinder chambers 33 and 37 is reduced. Forward clutch 25 is brought into the released state. Therefore, when the engine is restarted, forward clutch 25 and pulley cylinder chambers 33 and 37 of CVT 3 must be supplied with an oil pressure for operation of forward clutch 25 and primary and secondary pulleys 30a and 30b.

CVT control unit 9 is programmed to determine oil pressure value P0 at which a forward clutch transmittable torque capacity and a belt transmittable torque capacity are equal to each other. The forward clutch transmittable torque capacity and the belt transmittable torque capacity are determined based on oil pressure. CVT control unit 9 is programmed to output a first command to lockup solenoid valve 71 such that lockup solenoid valve 71 produces a signal pressure for communicating oil passages 41 and 93 at a full-open state when the oil pressure in oil passage 42 detected by pulley clamping pressure sensor 14 is not more than oil pressure value P0 upon a restart operation of the engine after idling stop. Further, CVT control unit 9 is programmed to determine engine speed value Ne0 corresponding to a transmittable torque produced when the forward clutch transmittable torque capacity and the belt transmittable torque capacity are equal to each other. The first command is outputted when engine speed Ne detected is not more than engine speed value Ne0. Further, CVT control unit 9 is programmed to compute the belt transmittable torque capacity on the basis of the oil pressure detected by pulley clamping pressure sensor 14, programmed to compute the forward clutch applying-pressure producing a transmittable torque equal to the belt transmittable torque capacity computed, and programmed to output a second command to lockup solenoid valve 71 such that lockup solenoid valve 71 generates a signal pressure indicative of a shelf pressure not more than the forward clutch applying-pressure computed until a predetermined condition is satisfied when either one of an oil pressure larger than oil pressure value P0 and an engine speed larger than engine speed value Ne0 is detected. Furthermore, CVT control unit 9 is programmed to determine second engine speed value Ne1 depending on the throttle opening degree detected. The predetermined condition is a condition that the engine speed detected is larger than second engine speed value Ne1.

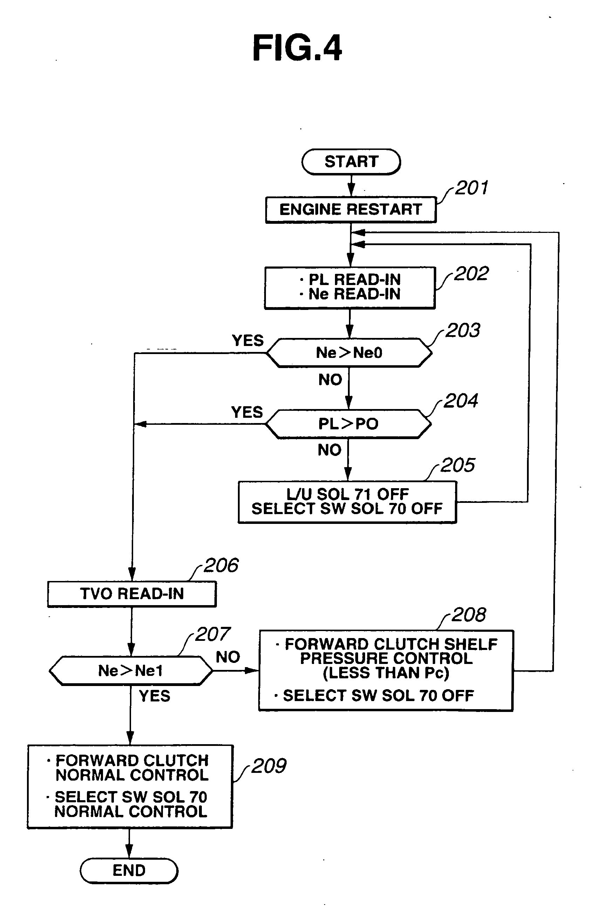

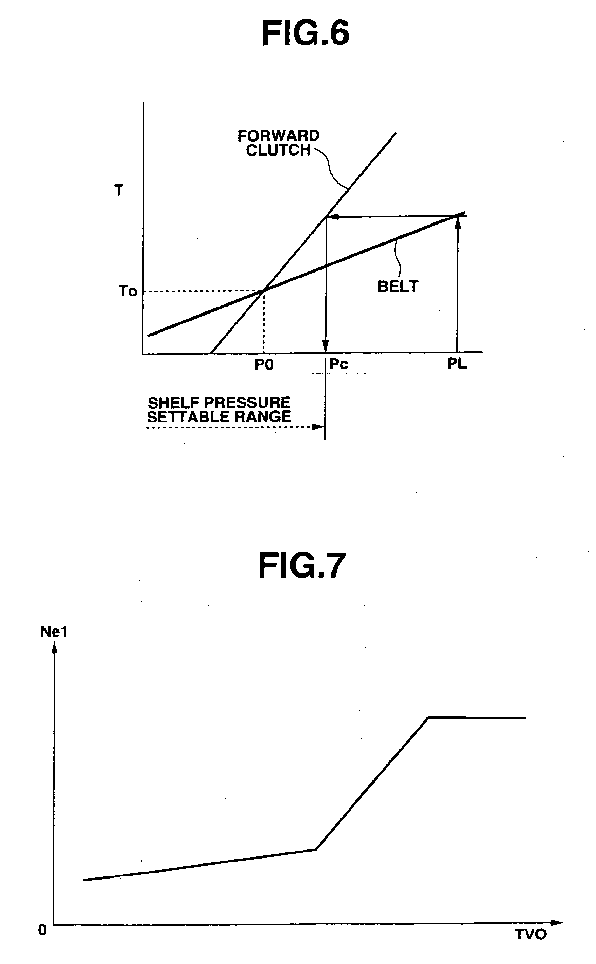

Referring to Fig. 4, a flow of the forward clutch pressure control upon an engine restart operation after idling stop, which is executed by CVT control unit 9, is explained. Logic flow starts and goes to block S201 where the engine is restarted. The logic flow goes to block S202 where line pressure PL and engine speed Ne are read-in. The logic flow goes to block S203 where an interrogation is made whether or not engine speed Ne is larger than engine speed value Ne0. If, at block S203, the interrogation is in affirmative, the logic flow jumps to block S206 where throttle opening degree TVO is read-in. The logic flow then goes to block S207 where an interrogation is made whether or not engine speed Ne is larger than engine speed value Ne1 determined by searching a map shown in Fig. 7. If, at block S207, the interrogation is in affirmative, the logic flow goes to block S209. At block S209, forward clutch 25 and select switching solenoid valve 70 are operated under normal control.

If, at block S203, the interrogation is in negative, the logic flow goes to block S204. At block S204, an interrogation is made whether or not line pressure PL is larger than pressure value P0 as forward clutch applying pressure. If, at block S204, the interrogation is in affirmative, the logic flow jumps to block S206 and then block S207. If, at block S207, the interrogation is in negative, the logic flow goes to block S208. At block S208, forward clutch 25 is operated under shelf pressure control (less than pressure value Pc as shown in Fig. 6) and select switching solenoid valve 70 is turned off. Here, it is noted that the shelf pressure means a hydraulic pressure having a value between values upon drainage and final application, obtained, e.g. upon semi-application of forward clutch 25, and having a rise rather flatly restrained like a shelf during a predetermined period of time. The logic flow then goes back to block S202. If, at block S204, the interrogation is in negative, the logic flow goes to block S205. At block S205, lockup solenoid valve 71 and select switching solenoid valve 70 are turned off, so that oil passages 41 and 93 are fluidly communicated at full-open state. The logic flow then goes back to block S202.

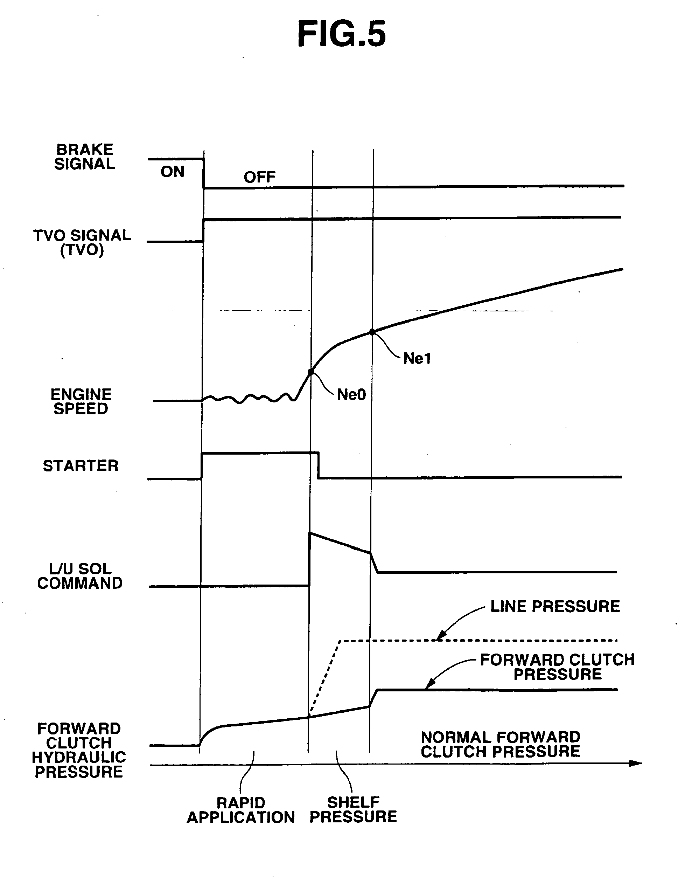

Fig. 5 shows a timing chart of the engine restart control. When the brake signal is turned off and the accelerator is depressed, the engine is cranked by operating a starter motor. During the period in which engine speed Ne is lower than engine speed value Ne0 and line pressure PL is less than pressure value P0, lockup solenoid valve 71 and select switching solenoid valve 70 are held in the OFF state.

Fig. 6 shows a relationship between line pressure PL and transmission torque capacity T of each of belt 34 and forward clutch 25. When line pressure PL is smaller than pressure value P0, transmission torque capacity T of belt 34 is larger than transmission torque capacity T of forward clutch 25. On the other hand, when line pressure PL is larger than pressure value P0, transmission torque capacity T of forward clutch 25 is larger than transmission torque capacity T of belt 34. Namely, if input torque is smaller than torque value To corresponding to pressure value P0, transmission torque capacity T of forward clutch 25 is smaller than transmission torque capacity T of belt 34 under the same hydraulic pressure condition. Therefore, even if line pressure PL and the forward clutch pressure become equal to each other, forward clutch 25 is slipped and acts as a torque limiter. As a result, belt 34 can be prevented from slippage.

Input torque T inputted from the engine and amplified by torque converter 1 is represented by the following formula:

$$T = \tau \times t \times Ne^2$$

where,

τ: coefficient of torque capacity of torque converter 1
t: stall torque ratio
Ne: engine speed

On the basis of the formula, engine speed value Ne0 is represented as follows: Ne0 = (To/(τ x t))$^{1/2}$

If engine speed Ne is not more than engine speed value Ne0 or line pressure PL is not more than pressure value P0, the command signal to lockup solenoid valve 71 is held at zero.

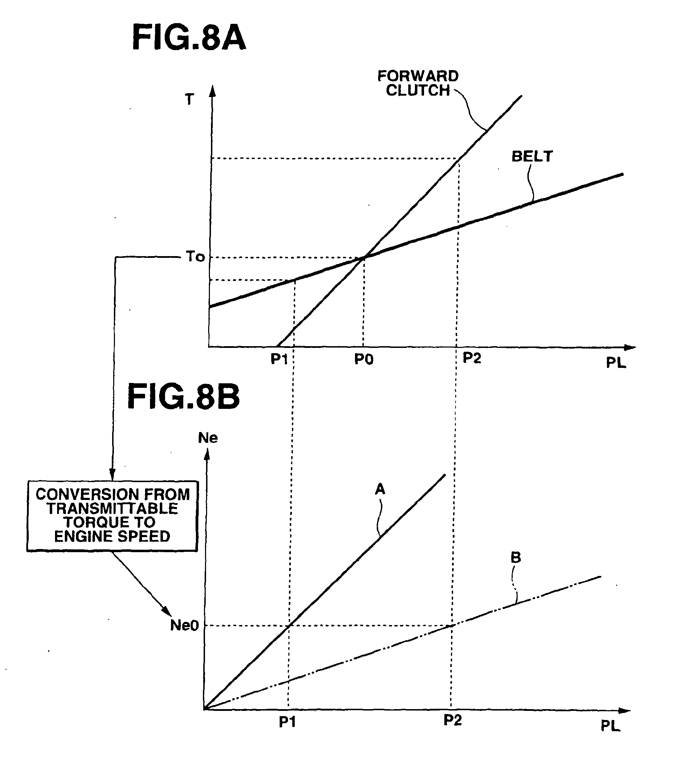

Referring to Figs. 8A and 8B, a relationship between transmission torque capacity T, engine speed Ne and oil pressure (line pressure) PL is explained. Fig. 8A shows a relationship between transmission torque capacity T and line pressure PL. Fig. 8B shows a relationship between engine speed Ne and line pressure PL generated depending on engine speed Ne. As illustrated in Fig. 8B, there is correlation between engine speed Ne and line pressure PL, whereas the characteristics of line pressure PL are determined depending on a pump capacity, oil passage designs and the like. For instance, in Fig. 8B, characteristic line A indicates a small increasing rate of line pressure PL relative to engine speed Ne, and characteristic line B indicates a large increasing rate of line pressure PL relative to engine speed Ne. As shown in Fig. 8A, when line pressure PL is pressure value P0, transmission torque capacities T of belt 34 and forward clutch 25 are equal to each other as indicated at To. Torque value To corresponds to engine speed value Ne0 shown in Fig. 8B. As shown in Fig. 8B, the line pressure generated at engine speed value Ne0 is indicated at P1 in characteristic line A and at P2 in characteristic line B. If line pressure P1 in characteristic line A and line pressure P2 in characteristic line B are fed back to Fig. 8A, line pressure P1 in characteristic line A is smaller than pressure value P0, and line pressure P2 in characteristic line B is larger than pressure value P0.

In the case of characteristic line A, the line pressure smaller than pressure value P0 is generated at the engine speed not more than engine speed value Ne0 corresponding to transmission torque capacity To of belt 34 and forward clutch 25. In this state, even when the torque larger than the transmission torque capacity of belt 34 is inputted from the engine, the transmission torque capacity of forward clutch 25 is smaller than that of belt 34. Therefore, there will occur slippage of forward clutch 25, but there will not occur slippage of belt 34.

In the case of characteristic line B, the line pressure larger than pressure value P0 is generated at the engine speed not more than engine speed value Ne0 corresponding to transmission torque capacity To of belt 34 and forward clutch 25. In this state, the transmission torque capacities of forward clutch 25 and belt 34 are larger than the torque inputted from the engine. Therefore, there is no occurrence of slippage of both forward clutch 25 and belt 34. Namely, if engine speed Ne is within the range smaller than engine speed value Ne0, belt 34 will be prevented from being slipped due to the input torque from the engine, regardless of the line pressure generated.

As explained above, if engine speed Ne smaller than engine speed value Ne0 is inputted, slippage of belt 34 can be surely prevented even when fluid communication between oil passages 41 and 93 is established. When oil passages 41 and 93 are fluidly communicated, the discharge pressure from oil pump 8 is supplied to forward clutch 25 via oil passages 41, 93 and 61 with less flow resistance. This causes forward clutch 25 to quickly come into the applied state as indicated as rapid application in the timing chart of Fig. 5.

When engine speed Ne exceeds engine speed value Ne0 or line pressure PL exceeds pressure value P0, the transmission torque capacity of forward clutch 25 becomes larger than that of belt 34. In this case, throttle opening degree TVO is detected, and engine speed value Ne1 corresponding to the detected value TVO is determined by searching the map shown in Fig. 7. As illustrated in Fig. 7, when throttle opening degree TVO is small, engine speed value Ne1 is small. The small throttle opening degree TVO indicates that rapid start of the vehicle is not requested. There will occur no shock even if forward clutch 25 is applied at engine speed value Ne1. If engine speed Ne is not more than engine speed value Ne1, the shelf pressure control of forward clutch 25 is conducted as follows. The torque capacity of belt 34 transmittable at the line pressure is always computed based on the oil pressure signal from sensor 14. A command signal to reduce line pressure PL to pressure value Pc or less in which the torque capacity of forward clutch 25 is not more than the computed torque capacity of belt 34, is outputted to lockup solenoid valve 71. In response to the command signal, lockup solenoid valve 71 is operated to reduce line pressure PL. Reduced line pressure PL is supplied to select control valve 90 via select switching valve 80, so that select control valve 90 is actuated to regulate line pressure PL that is fed from oil passage 41. On the other hand, select switching solenoid valve 70 is held in the OFF state. As a result, the oil pressure supplied to forward clutch 25 is regulated to the shelf pressure as shown in the timing chart of Fig. 5, in which forward clutch 25 is controlled so as to smoothly come into the applied state.

In Fig. 7, when throttle opening degree TVO is large, engine speed value Ne1 is large. The large throttle opening degree TVO indicates that the rapid start of the vehicle is requested and that the input torque from the engine is large. In this condition, the clamping pressure to be supplied to respective pulley cylinder chambers 33 and 37 and the applying pressure to be supplied to forward clutch 25 must be built up to a sufficient level. When engine speed Ne reaches engine speed value Ne1 or higher, the sufficient supply of the pulley clamping pressure and the forward clutch applying pressure is allowed. This prevents excessive slippage of belt 34 and forward clutch 25.

At the time at which engine speed Ne exceeds engine speed value Ne1, the operations of forward clutch 25 and select switching solenoid valve 70 are shifted to normal control. Namely, forward clutch 25 and select switching solenoid valve 70 are operated at normal pressure.

As described above, in the hydraulic control system of the present invention, the command signal to decrease the signal pressures of lockup solenoid valve 71 and select switching solenoid valve 70 to zero is outputted upon the engine restart operation after idling stop. Accordingly, when the engine is restarted, the applying pressure can be supplied to forward clutch 25 via oil passages 41 and 93 fluidly communicated with each other with less flow resistance. This allows a rise of the forward clutch applying pressure substantially simultaneously with a rise of the line pressure. As a result, forward clutch 25 can be rapidly brought into the applicable state.

Further, if engine speed Ne detected by engine speed sensor 15 is larger than engine speed value Ne0 or the oil pressure detected by forward clutch pressure sensor 7 is larger than pressure value P0, lockup solenoid valve 71 is turned on. Namely, if the input torque from the engine is not more than value To, the applying torque capacity of forward clutch 25 is smaller than the torque capacity of belt 34 under the same oil pressure condition. The forward clutch applying pressure can be equal to line pressure PL. Even if large torque is inputted, forward clutch 25 will be slipped to thereby act as a torque limiter, so that slippage of belt 34 can be prevented. Meanwhile, instead of determining engine speed value Ne0 and comparing engine speed Ne detected with engine speed value Ne0, the transmittable torque capacity of belt 34 may be calculated based on the engine speed detected, and the belt transmittable torque capacity calculated may be compared with the transmittable torque capacity corresponding to pressure value P0.

Further, the forward clutch applying pressure at which the forward clutch transmittable torque is equal to the belt transmittable torque capacity, is determined. The signal pressure indicating the shelf pressure not more than the determined forward clutch applying pressure is transmitted to lockup solenoid valve 71. This allows the shelf pressure control of forward clutch 25 without slippage of belt 34. Forward clutch 25 can be smoothly applied, and belt 34 can be prevented from slippage.

Further, when engine speed Ne exceeds engine speed value Ne1 determined by searching Fig. 7, changeover from the application control of forward clutch 25 to the normal control thereof is performed. Even when a large opening degree of the accelerator is requested by the vehicle driver, the changeover of forward clutch 25 to the normal control is performed at the engine speed corresponding to the accelerator opening degree. Namely, even when a large torque is requested, the changeover of forward clutch 25 to the normal control is performed while keeping a sufficient oil pressure. This can prevent the engine racing which will be caused due to slippage of forward clutch 25.

Furthermore, the application control of forward clutch 25 is conducted merely by operating lockup solenoid valve 71, without adding other components. Therefore, the design of hydraulic control valve unit 6 does not need to be largely modified. This serves for saving the production cost.

This application is based on Japanese Patent Application No. 2002-114079 filed on April 17, 2002,

Although the invention has been described above by reference to a certain embodiment of the invention, the invention is not limited to the embodiment described above. Modifications and variations of the embodiment described above will occur to those skilled in the art, in light of the above teachings. The scope of the invention is defined with reference to the following claims.

## Claims

1. A hydraulic control system for an automatic transmission including a belt-drive continuously variable transmission (3), a forward clutch (25) and a torque converter (1) connected to an engine, the system comprising:

    an oil pump (8) drivingly connected to the engine;
    forward clutch applying-pressure regulator means (90) for regulating an applying-pressure to the forward clutch (25);
    an electronically-operated hydraulic control valve (71) outputting a first signal pressure indicative of an optionally settable oil pressure to the forward clutch applying-pressure regulator means (90);

    a control unit (9) controlling the hydraulic control valve (71);
    a first oil passage (41) communicating the oil pump (8) and the forward clutch applying-pressure regulator means (90), the first oil passage (41) having a reduced flow resistance;
    a second oil passage (93) communicating the clutch applying-pressure regulator means (90) and the forward clutch (25), the second oil passage (93) having a reduced flow resistance;
    a third oil passage (42) feeding a clamping pressure applied to the belt (34) of the continuously variable transmission (3); and
    hydraulic pressure detector means (14) for detecting an oil pressure in the third oil passage (42);
    the forward clutch applying-pressure regulator means (90), in response to the signal pressure from the hydraulic control valve (71), controlling the communication between the first and second oil passages (41, 93);
    the control unit (9) being programmed to determine an oil pressure value (P0) at which a forward clutch transmittable torque capacity and a belt transmittable torque capacity are equal to each other, the forward clutch transmittable torque capacity and the belt transmittable torque capacity being determined based on oil pressure, and programmed to output a first command to the hydraulic control valve (71) such that the hydraulic control valve (71) produces a second signal pressure for communicating the first and second oil passages (41, 93) at a full-open state when the oil pressure in the third oil passage (42) detected by the hydraulic pressure detector means (14) is not more than the determined oil pressure value (P0) upon a restart operation of the engine after idling stop.

2. The hydraulic control system as claimed in claim 1, further comprising engine speed detector means (15) for detecting engine speed (Ne), wherein the control unit (9) is programmed to determine an engine speed value (Ne0) corresponding to a transmittable torque produced when the forward clutch transmittable torque capacity and the belt transmittable torque capacity are equal to each other, the first command being outputted when the engine speed (Ne) detected is not more than the engine speed value (Ne0).

3. The hydraulic control system as claimed in claim 1 or 2, wherein the control unit (9) is programmed to compute the belt transmittable torque capacity on the basis of the oil pressure detected by the hydraulic pressure detector means (14), programmed to compute the forward clutch applying-pressure producing a transmittable torque equal to the belt transmittable torque capacity computed, and programmed to output a second command to the hydraulic control valve (71) such that the hydraulic control valve (71) generates a third signal pressure indicative of a shelf pressure not more than the forward clutch applying-pressure computed until a predetermined condition is satisfied when either one of an oil pressure larger than the oil pressure value (P0) and an engine speed larger than the engine speed value (Ne0) is detected.

4. The hydraulic control system as claimed in claim 3, further comprising an electronically-operated switching valve (70) electronically connected to the control unit (9), and a switching valve (80) connected with the electronically-operated switching valve (70) and the hydraulic control valve (71), the switching valve (80) establishing fluid communication between the hydraulic control valve (71) and the forward clutch applying-pressure regulator means (90) in response to the third signal pressure.

5. The hydraulic control system as claimed in claim 3 or 4, further comprising forward clutch pressure detector means (7) for detecting an oil pressure in the second oil passage (93), wherein the second command is outputted based on the oil pressure detected.

6. The hydraulic control system as claimed in any one of claims 3-5, further comprising throttle opening degree detector means (10) for detecting a throttle opening degree (TVO), wherein the control unit (9) is programmed to determine a second engine speed value (Ne1) depending on the throttle opening degree detected, the predetermined condition being a condition that the engine speed detected is larger than the second engine speed value (Ne1).

7. The hydraulic control system as claimed in any one of claims 1-6, further comprising a lockup clutch (2) allowing direct connection of the torque converter (1) with the engine and the belt-drive continuously variable transmission (3), a lockup solenoid valve (71) outputting a signal pressure to control application of the lockup clutch (2), a lockup control valve (95) outputting a lockup clutch applying-pressure on the basis of the signal pressure outputted from the lockup solenoid valve (71), and switching means (80) for switching between first fluid communication between the lockup solenoid valve (71) and the lockup control valve (95) and second fluid communication between the lockup solenoid valve (71) and the forward clutch applying-pressure regulator means (90), the switching means establishing the first fluid communication upon applying the lockup clutch (2) and establishing the second fluid communication upon releasing the lockup clutch (2).

8. The hydraulic control system as claimed in any one of claims 1-7, wherein the forward clutch applying-pressure regulator means (90) comprises a hydraulic pressure regulator valve having a spool valve (92).

9. The hydraulic control system as claimed in claims 6-8, wherein switching means (80) comprises a switching valve.

## Patentansprüche

1. Hydraulisches Steuerungssystem für ein automatisches Getriebe, enthaltend ein riemengetriebenes stufenlos veränderbares Getriebe (3), eine Vorwärtskupplung (25) und einen Drehmomentwandler (1), verbunden mit einer Brennkraftmaschine, wobei das System aufweist:

   eine Ölpumpe (8), antreibend mit der Brennkraftmaschine verbunden;
   eine Vorwärtskupplung- Anlegedruck- Regeleinrichtung (90) zum Regeln eines Anlegedruckes an die Vorwärtskupplung (25);
   eine elektronisch- betätigtes hydraulisches Steuerungsventil (71), das einen ersten Signaldruck ausgibt, anzeigend einen optional einstellbaren Öldruck an die Vorwärtskupplung- Anlegedruck- Regeleinrichtung (90);
   eine Steuerungseinheit (9), die das hydraulische Steuerungsventil (71) steuert; einen ersten Ölkanal (41), der die Ölpumpe (8) und die Vorwärtskupplung- Anlegedruck- Regeleinrichtung (90) verbindet, wobei der erste Ölkanal (41) einen verminderten Strömungswiderstand hat;
   einen zweiten Ölkanal (93), der die Vorwärtskupplung- Anlegedruck- Regeleinrichtung (90) und die Vorwärtskupplung (25) verbindet, wobei der zweite Ölkanal einen verminderten Strömungswiderstand hat;
   einen dritten Ölkanal (42), der einen Klemmdruck, aufgebracht auf den Riemen (34) des stufenlos veränderbaren Getriebes (3), zuführt; und
   eine Hydraulikdruck- Erfassungseinrichtung (14) zum Erfassen eines Öldruckes in dem dritten Ölkanal (42);

   wobei die Vorwärtskupplung- Anlegedruck- Regeleinrichtung (90), in Abhängigkeit von dem Signaldruck von dem hydraulischen Steuerungsventil (71), die Verbindung zwischen dem ersten und dem zweiten Ölkanal (41, 93) steuert;
   wobei die Steuerungseinheit (9) programmiert ist, einen Öldruckwert (P0) festzulegen, bei dem eine durch die Vorwärtskupplung übertragbare Drehmomentkapazität und eine durch den Riemen übertragbare Drehmomentkapazität zueinander gleich sind, wobei die durch die Vorwärtskupplung übertragbare Drehmomentkapazität auf der Grundlage von dem Öldruck festgelegt wird, und programmiert ist, einen ersten Befehl an das hydraulische Steuerungsventil (71) derart auszugeben, dass das hydraulische Steuerungsventil (71) einen zweiten Signaldruck für die Verbindung des ersten und des zweiten Ölkanals (41, 93) bei einem vollständigen Offen- Zustand erzeugt, wenn der Öldruck in dem dritten Ölkanal (42), erfasst durch die Hydraulikdruck- Erfassungseinrichtung (14), nicht größer als der festgelegte Öldruckwert (P0) während eines Neustartvorgangs der Brennkraftmaschine nach einem Leerlaufstop ist.

2. Hydraulisches Steuerungssystem nach Anspruch 1, außerdem aufweisend eine Motordrehzahl- Erfassungseinrichtung (15) zum Erfassen der Motordrehzahl (Ne), wobei die Steuerungseinheit (9) programmiert ist, einen Motordrehzahlwert (Ne0) festzulegen, der einem übertragbaren Drehmoment entspricht, erzeugt, wenn die durch die Vorwärtskupplung übertragbare Drehmomentkapazität und die durch den Riemen übertragbare Drehmomentkapazität zueinander gleich sind, wobei der erste Befehl ausgegeben wird, wenn die erfasste Motordrehzahl (Ne) nicht größer als der Motordrehzahlwert (Ne0) ist.

3. Hydraulisches Steuerungssystem nach Anspruch 1 oder 2, wobei die Steuerungseinheit (9) programmiert ist, die durch den Riemen übertragbare Drehmomentkapazität auf der Grundlage des Öldruckes, erfasst durch die Hydraulikdruck- Erfassungseinrichtung (14), zu berechnen, programmiert ist, den Kupplungs- Anlegedruck zu berechnen, der ein übertragbares Drehmoment gleich zu der durch den Riemen übertragbare, berechnete Drehmomentkapazität erzeugt, und programmiert ist, einen zweiten Befehl an das hydraulische Steuerungsventil (71) derart auszugeben, dass das hydraulische Steuerungsventil (71) einen dritten Signaldruck erzeugt, anzeigend einen Haltedruck nicht größer als der berechnete Vorwärtskupplungs- Anlegedruck, bis einer festgelegten Bedingung genügt wird, wenn entweder ein Öldruck größer als der Öldruckwert (P0) oder eine Motordrehzahl größer als der Motordrehzahlwert (Ne0) erfasst wird.

4. Hydraulisches Steuerungssystem nach Anspruch 3, außerdem aufweisend ein elektronisch- betätigtes Schaltventil (70), elektronisch mit der Steuerungseinheit (9) verbunden, und ein Schaltventil (80), verbunden mit dem elektronisch- betätigten Schaltventil (70) und dem hydraulischen Steuerungsventil (71), wobei das Schaltventil (80) eine Fluid- Verbindung zwischen dem hydraulischen Steuerungsventil (71) und der Vorwärtskupplung- Anlegedruck- Regeleinrichtung (90) in Abhängigkeit von dem dritten Signaldruck herstellt.

5. Hydraulisches Steuerungssystem nach Anspruch 3 oder 4, außerdem aufweisend eine Vorwärtskupplung- Druckerfassungseinrichtung (7) zum Erfassen eines Öldruckes in dem zweiten Ölkanal (93), wobei der zweite Befehl auf der Grundlage des erfassten Öldruckes ausgegeben wird.

6. Hydraulisches Steuerungssystem nach einem der Ansprüche 3 - 5. außerdem aufweisend eine Drosselöffnungsgrad- Erfassungseinrichtung (10) zum Erfassen eines Drosselöffnungsgrades (TVO), wobei die Steuerungseinheit (9) programmiert ist, einen zweiten Motordrehzahlwert (Ne1) in Abhängigkeit von dem erfassten Drosselöffnungsgrad festzulegen, wobei die festgelegte Bedingung eine Bedingung ist, dass die erfasste Motordrehzahl größer als der zweite Motordrehzahlwert (Ne1) ist.

7. Hydraulisches Steuerungssystem nach einem der Ansprüche 1 - 6, außerdem aufweisend eine Sperr- Kupplung (2), die eine direkte Verbindung des Drehmomentwandlers (1) mit der Brennkraftmaschine und dem riemengetriebenen stufenlos veränderbaren Getriebe (3) gestattet, ein Sperr- Magnetspulenventil (71), das einen Signaldruck ausgibt, um die Anwendung der Sperr- Kupplung (2) zu steuern, ein Sperr- Steuerungsventil (95), das ausgibt einen Sperr- Kupplungs-Anlegedruck auf der Grundlage des Signaldruckes, ausgegeben von dem Sperr-Magnetspulenventil (71), und eine Schalteinrichtung (80) zum Schalten zwischen der ersten Fluid- Verbindung zwischen dem Sperr- Magnetspulenventil (71) und dem Sperr- Steuerungsventil (95), und einer zweiten Fluid- Verbindung zwischen dem Sperr- Magnetspulenventil (71) und der Vorwärtskupplung-Anlegedruck-Regeleinrichtung (90), wobei die Schalteinrichtung die erste Fluid- Verbindung nach Anwenden der Sperr- Kupplung (2) herstellt und die zweite Fluid- Verbindung nach dem Lösen der Sperr-Kupplung (2) herstellt.

8. Hydraulisches Steuerungssystem nach einem der Ansprüche 1 - 7, wobei die Vorwärtskupplung- Anlegedruck- Regeleinrichtung (90) ein hydraulisches Druckregelventil aufweist, das ein Schieberventil (92) hat.

9. Hydraulisches Steuerungssystem nach Ansprüchen 6 - 8, wobei die Schalteinrichtung (80) ein Schaltventil aufweist.

**Revendications**

1. Système de commande hydraulique pour une transmission automatique comportant une transmission variable en continu à entraînement par courroie (3), un embrayage avant (25) et un convertisseur de couple (1) relié à un moteur, le système comprenant:

une pompe d'huile (8) reliée de façon menante au moteur;
un moyen de régulation de pression d'application à l'embrayage avant (90) pour réguler une pression d'application à l'embrayage avant (25);
une vanne de commande hydraulique à commande électronique (71) émettant une pression de premier signal indicative d'une pression d'huile optionnellement réglable au moyen de régulation de pression d'application à l'embrayage avant (90);
une unité de commande (9) commandant la vanne de commande hydraulique (71);
un premier passage d'huile (41) établissant une communication entre la pompe à huile (8) et le moyen de régulation de pression d'application à l'embrayage avant (90), le premier passage d'huile (41) ayant une résistance réduite à l'écoulement;
un deuxième passage d'huile (93) établissant une communication entre le moyen de régulation de pression d'application à l'embrayage (90) et l'embrayage avant (25), le deuxième passage d'huile (93) ayant une résistance réduite à l'écoulement;
un troisième passage d'huile (42) fournissant une pression de serrage appliquée à la courroie (34) de la transmission variable en continu (3); et
un moyen de détection de pression hydraulique (14) pour détecter une pression d'huile dans le troisième passage d'huile (42);
le moyen de régulation de pression d'application à l'embrayage avant (90), en réponse à la pression du signal de la vanne de commande hydraulique (71), commandant la communication entre les premier et deuxième passages d'huile (41, 93);
l'unité de commande (9) étant programmée pour déterminer une valeur de pression d'huile (PO) à laquelle la capacité de couple pouvant être transmise à l'embrayage avant et une capacité de couple pouvant être transmise à la courroie sont égales l'une à l'autre, la capacité de couple pouvant être transmise à l'embrayage avant et la capacité de couple pouvant être transmise à la courroie étant déterminées sur la base de la pression d'huile et programmées pour émettre une première instruction à la vanne de commande hydraulique (71) de sorte que la vanne de commande hydraulique (71) produit une deuxième pression de signal pour la communication des premier et deuxième passages d'huile (41, 93) à un état entièrement ouvert lorsque la pression d'huile dans le troisième passage d'huile (42) détectée par le moyen de détection de pression hydraulique (14) n'est pas supérieure à la valeur de pression d'huile déterminée (PO) lors d'une opération de redémarrage du moteur après un arrêt au ralenti.

2. Système de commande hydraulique selon la revendication 1, comprenant en outre un moyen de détection de vitesse de moteur (15) pour détecter la vitesse du moteur (Ne), où l'unité de commande (9) est programmée pour déterminer une valeur de vitesse de moteur (NeO) correspondant à un couple pouvant être transmis produit lorsque la capacité de couple pouvant être transmise à l'embrayage avant et la capacité de couple pouvant être transmise à la courroie sont égales l'une à l'autre, la première instruction étant émise lorsque la vitesse du moteur (Ne) détectée n'est pas supérieure à la valeur de vitesse de moteur (NeO).

3. Système de commande hydraulique selon la revendication 1 ou 2, dans lequel l'unité de commande (9) est programmée pour calculer la capacité de couple pouvant être transmise à la courroie sur la base de la pression d'huile détectée par le moyen de détection de pression hydraulique (14) programmé pour calculer la pression d'application à l'embrayage avant produisant un couple transmissible égal à la capacité calculée du couple transmissible à la courroie, et programmé pour émettre une deuxième instruction à la vanne de commande hydraulique (71) de sorte que la vanne de commande hydraulique (71) produit une troisième pression de signal indicative d'une pression de conservation non supérieure à la pression d'application d'embrayage avant calculée jusqu'à ce qu'un état prédéterminé soit satisfait lorsqu'une parmi une pression d'huile plus grande que la valeur de pression d'huile (PO) et une vitesse de moteur plus grande que la valeur de vitesse de moteur (NeO) est détectée.

4. Système de commande hydraulique selon la revendication 3, comprenant en outre une vanne de commutation commandée électroniquement (70) reliée électroniquement à l'unité de commande (9), et une vanne de commutation (90) reliée à la vanne de commutation commandée électroniquement (70) et la vanne de commande hydraulique (71), la vanne de commutation (80) établissant une communication fluidique entre la vanne de commande hydraulique (71) et le moyen de régulation de pression d'application à l'embrayage avant (90) en réponse à la troisième pression de signal.

5. Système de commande hydraulique selon la revendication 3 ou 4, comprenant en outre un moyen de détection de pression à l'embrayage avant (7) pour détecter une pression d'huile dans le deuxième passage d'huile (93), où la deuxième instruction est émise sur la base de la pression d'huile détectée.

6. Système de commande hydraulique selon l'une quelconque des revendications 3 à 5, comprenant en outre un moyen de détection de degré d'ouverture du papillon (10) pour détecter un degré d'ouverture du papillon (TVO), où l'unité de commande (9) est programmée pour déterminer une deuxième valeur de vitesse du moteur (Ne1) dépendant du degré d'ouverture du papillon détecté, la condition prédéterminée étant une condition où la vitesse du moteur détectée est plus grande que la deuxième valeur de vitesse du moteur (Ne1).

7. Système de commande hydraulique selon l'une quelconque des revendications 1 à 6, comprenant en outre un embrayage de verrouillage (2) permettant une connexion directe du convertisseur de couple (1) avec le moteur et de la transmission variable en continu à entraînement par courroie (3), une vanne de verrouillage à solénoïde (71) émettant une pression de signal pour commander l'application de l'embrayage de verrouillage (2), une vanne de commande de verrouillage (95) émettant une pression d'application d'embrayage de verrouillage sur la base de la pression de signal émise par la vanne de verrouillage à solénoïde (71), et un moyen de commutation (80) pour commuter entre la première communication fluidique entre la vanne de verrouillage à solénoïde (71) et la vanne de commande de verrouillage (95) et la deuxième communication fluidique entre la vanne de verrouillage à solénoïde (71) et le moyen de régulation de pression d'application à l'embrayage avant (90), le moyen de commutation établissant la première communication fluidique lors de l'application de l'embrayage de verrouillage (2) et établissant la deuxième communication fluidique lors de la libération de l'embrayage de verrouillage (2).

8. Système de commande hydraulique selon l'une quelconque des revendications 1 à 7, dans lequel le moyen de régulation de pression d'application à l'embrayage avant (90) comprend une vanne de régulation de pression hydraulique ayant une vanne à tiroir (92).

9. Système de commande hydraulique selon les revendications 6 à 8, dans lequel le moyen de commutation (80) comprend une vanne de commutation.

# FIG.1

# FIG.2

F: FILTER

EP 1 355 089 B1

EP 1 355 089 B1

# FIG.3

```
                    ┌─────────┐
                    │  START  │
                    └────┬────┘
                         │
101                      ▼
NO      ╱───────────────────────────╲    Toil : OIL TEMPERATURE
◄───────┤ IDLING STOP SW ENERGIZED?  │   Tlow : LOWER LIMIT
        │   VEHICLE SPEED ZERO?      │          TEMPERATURE
        │     BRAKE SW ON?           │    Thi : UPPER LIMIT
        │  STEERING ANGLE ZERO?      │          TEMPERATURE
        ╲   OUT OF R RANGE ?        ╱
                         │ YES
102                      ▼
        ╱─────────────────────╲  NO
        │     D RANGE?         │─────┐
        ╲─────────────────────╱     │
                         │ YES       │
                         ▼           │ 103
NO      ╱─────────────────────╲     │
◄───────┤   Tlow<Toil<Thi      │     │
        ╲─────────────────────╱     │
                         │ YES       │
                         ◄───────────┘
                         ▼
104                      ▼
        ┌─────────────────────┐
        │    ENGINE STOP      │
        └──────────┬──────────┘
                   │           105
NO      ╱─────────────────────╲
◄───────┤    BRAKE SW ON?      │
        ╲─────────────────────╱
                   │ YES
106                ▼
        ╱─────────────────────────────╲  NO
        │ IDLING STOP SW DEENERGIZED?  │────┐
        ╲─────────────────────────────╱    │
                   │ YES                     │
                   ◄─────────────────────────┘
                   ▼
        ┌─────────────────────┐  107
        │ ENGINE RESTART CONTROL │
        └──────────┬──────────┘
                   ▼
              ┌─────────┐
              │   END   │
              └─────────┘
```

15

# FIG.4

```
        ( START )
            |
            v
    ENGINE RESTART          ⌐201
            |
            v <--------------------+
                               <---+|
    · PL READ-IN             ⌐202  ||
    · Ne READ-IN                   ||
            |                      ||
            v                      ||
  YES   /           \     ⌐203     ||
  <-----\  Ne > Ne0  /              ||
  |      \           /             ||
  |         | NO                   ||
  |         v                      ||
  |  YES /         \   ⌐204        ||
  |  <---\ PL > PO  /              ||
  |  |    \        /               ||
  |  |       | NO       ⌐205       ||
  |  |       v                     ||
  |  |  L/U SOL 71 OFF             ||
  |  |  SELECT SW SOL 70 OFF ------+|
  |  |                             
  |  |                             
  v  v                             
  TVO READ-IN     ⌐206             
            |                      
            v          ⌐207        ⌐208
        /         \   NO    · FORWARD CLUTCH SHELF
        \ Ne > Ne1 /  ----->   PRESSURE CONTROL
        \         /            (LESS THAN Pc)
            | YES          · SELECT SW SOL 70 OFF -----+
            v                                          |
  · FORWARD CLUTCH                                     
    NORMAL CONTROL     ⌐209                            
  · SELECT SW SOL 70                                   
    NORMAL CONTROL                                     
            |                                          
            v                                          
        ( END )                                        
```

# FIG.5

# FIG.6

# FIG.7

# FIG.8A

# FIG.8B

CONVERSION FROM
TRANSMITTABLE
TORQUE TO
ENGINE SPEED

# FIG.9
## (RELATED ART)

IN
O/P
OUT
*300*

*301*

*302*

PMF.V

PULLEY CLAMPING PRESSURE

PILOT.V
*330*

P.REG.V

*303*

*331*

*311*
*304*
*310*

F

CL.REG.V

*312*

*320*

T/C REG.V

L/U SOL
*340*

SELECT SW SOL
*350*

SELECT CONT V
*370*

*313*

*371*

*361*

*341*

*351*

*360*

SELECT.SW.V

MANUAL V

*382*

FWD/C

*390*

*380*

*381*

F: FILTER

EP 1 355 089 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0487129 A
- JP 2002114079 A